# EUROPÄISCHE PATENTSCHRIFT

(11) **EP 2 996 943 B1**
(45) Veröffentlichungstag und Bekanntmachung des Hinweises auf die Patenterteilung: **27.09.2017**
(21) Anmeldenummer: 14726079.8
(22) Anmeldetag: 14.05.2014
(51) Int. Cl.: B65B 1/38, B65B 1/36, A61J 3/07, G01F 11/10

(54) **STECHHEBER ZUM VOLUMETRISCHEN DOSIEREN VON PULVER**
PIPETTE FOR VOLUMETRICALLY METERING POWDER
PIPETTE POUR LE DOSAGE VOLUMÉTRIQUE DE POUDRE

(30) Priorität: 17.05.2013 DE 202013004663 U
(43) Veröffentlichungstag der Anmeldung: 23.03.2016
(73) Patentinhaber: Harro Höfliger Verpackungsmaschinen GmbH, 71573 Allmersbach im Tal (DE)
(72) Erfinder: NITSCH, Steffen, 71573 Allmersbach im Tal (DE)
(74) Vertreter: Zurhorst, Stefan
(86) Internationale Anmeldenummer: PCT/EP2014/001305
(87) Internationale Veröffentlichungsnummer: WO 2014/183872

(56) Entgegenhaltungen:
- DE-U1- 20 309 279
- DE-U1-202005 003 161
- US-B1- 6 918 940

## Beschreibung

Die Erfindung betrifft einen Stechheber zum volumetrischen Dosieren von Pulver der im Oberbegriff des Anspruchs 1 angegebenen Gattung.

Bei bestimmten Anwendungsfällen kommt es auf eine exakte Abmessung von einzelnen Pulvermengen an, die aus einem Vorrat entnommen und in vorbestimmter Menge beispielsweise in einen Behälter eingefüllt werden sollen. Insbesondere im medizinischen Bereich werden pulvrige Medikamente in Kapseln, Blister oder Dosiergeräte eingefüllt. Um die nach medizinischen Maßstäben erforderliche Wirkstoffmenge exakt bereitzustellen, sind Dosierungstoleranzen so klein wie möglich zu halten.

Um unter industriellen Füllbedingungen eine hohe Bearbeitungsgeschwindigkeit bei gleichzeitig hinreichender Genauigkeit zu erzielen, wird verbreitet eine volumetrische Dosierung vorgenommen. Neben Walzendosierern oder dergleichen werden insbesondere sogenannte Stechheber eingesetzt, die einen äußeren Dosiermantel umfassen. Der Dosiermantel umschließt in Umfangsrichtung eine Dosierkammer, wobei die Dosierkammer an einem freien Ende des Stechhebers eine Öffnung aufweist. Ein solcher Stechheber wird mit der Öffnung voraus in ein Pulverbett eingetaucht. Die Dosierkammer befüllt sich mit dem Pulver beim Eintauchen des Stechhebers. Die durch das Volumen der Dosierkammer vorgegebene Pulvermenge verbleibt beim Herausziehen des Stechhebers aus dem Pulverbett in der Dosierkammer. Das Pulver kann mit dem Stechheber transportiert und aus der Dosierkammer heraus in den vorgesehenen Behälter eingefüllt werden.

Man unterscheidet zwischen zwei Bauformen von Stechhebern, die je nach den Eigenschaften des zu dosierenden Pulvers eingesetzt werden. Ein sogenannter Kompaktionsstechheber kommt bei Pulvern mit hohen Bindungskräften zum Einsatz. Innerhalb des Dosiermantels ist hier ein gegenüber dem Dosiermantel axial verschiebbarer Dosierstempel angeordnet, mittels dessen zunächst das Volumen der Dosierkammer eingestellt wird. Beim Eintauchen des Kompaktionsstechhebers wird das Pulver in der Dosierkammer kompaktiert. Kohäsionskräfte und andere Bindungskräfte zwischen den Pulverkörnern und an den Kammerwänden halten das Pulver selbsttätig in der Dosierkammer. Am Zielort wird das Pulver mittels des Dosierstempels in den Zielbehälter ausgestoßen. Problematisch ist hierbei, dass das Pulver beim Eindringen in die Dosierkammer die dort befindliche Luft verdrängen muss. Es kann ein Luftpolster entstehen, welches zu Dosierungenauigkeiten führt.

Bei Pulvern mit geringeren Bindungskräften ist ein selbsttätiges Haften in der Dosierkammer nicht sichergestellt. Das in der Dosierkammer befindliche Pulver kann nach dem Herausziehen des Stechhebers aus dem Pulverbett herausfallen. In solchen Fällen kommen sogenannte Vakuumstechheber zum Einsatz. Hierbei ist die Dosierkammer auf der in Längsrichtung gegenüberliegenden Seite ihrer Öffnung durch ein luftdurchlässiges Rückhalteelement begrenzt. Durch das Rückhalteelement hindurch wird die Dosierkammer mit Unterdruck beaufschlagt, der das Pulver trotz seiner geringen Bindungskräfte in der Dosierkammer hält. Das Rückhalteelement hält das Pulver gegen den anliegenden Unterdruck in der Dosierkammer. Am Zielort wird anstelle des Unterdrucks ein Überdruck durch das Rückhalteelement hindurch in die Dosierkammer eingeleitet, wodurch das dort befindliche Pulver in den Zielbehälter ausgeblasen wird.

Das luftdurchlässige Rückhalteelement wird üblicherweise als Tiefenfilter aus einem Metallfiltergewebe mit einer bestimmten Dicke, mit einer bestimmten Porenweite und mit einer bestimmten mechanischen Belastbarkeit ausgeführt. Die Porenweite wird auf die Korngröße des zu dosierenden Pulvers abgestimmt, sodass zwar Luft, nicht aber Pulverpartikel hindurch treten können. Beim Eintauchen des Vakuum-Stechhebers in das Pulverbett drückt das Pulver gegen den Tiefenfilter. Diesem Druck und auch dem durch das Vakuum erzeugten Anpressdruck des Pulvers muss der Tiefenfilter standhalten können.

Die Fertigung solcher Vakuum-Stechheber ist kostenintensiv, da nach jedem Fertigungsschritt die Beschaffenheit der Tiefenfilter geprüft werden muss. Der Tiefenfilter kann sich beim Dosierprozess aufgrund der wirkenden Drücke quer zu seiner Ebene verformen, sodass Volumenänderungen der Dosierkammer und somit Dosiergewichtsunterschiede auftreten. Die erreichbare Dosiergenauigkeit ist also begrenzt. Ein Zusetzen des Metallfiltergewebes reduziert zudem die Langzeitstabilität. Wurde das bisherige Metallfiltergewebe durch zu hohe Kräfte deformiert oder beschädigt, war eine Neufertigung unumgänglich.

Aus der DE 203 09 279 U1 ist eine Filterkolbenvorrichtung mit einer Dosierkammer bekannt, wobei die Dosierkammer mittels eines Rückhalteelementes in Form eines biegeweichen Filters begrenzt ist. Der Filter ist auf seiner der Dosierkammer abgewandten Rückseite mittels eines luftdurchlässigen, quer zur Ebene des Filters steifen Stützkerns abgestützt.

Der Erfindung liegt die Aufgabe zu Grunde, einen gattungsgemäßen Stechheber derart weiterzubilden, dass Dosiergenauigkeit, Langzeitstabilität und Kosten verbessert sind.

Diese Aufgabe wird durch einen Stechheber mit den Merkmalen des Anspruchs 1 gelöst.

Nach der Erfindung ist vorgesehen, dass das Rückhalteelement als biegeweicher Filter und insbesondere als dünner Oberflächenfilter ausgeführt ist, und dass der Filter auf seiner der Dosierkammer abgewandten Rückseite mittels eines luftdurchlässigen, quer zur Ebene des Filters steifen Stützkerns abgestützt ist. Die gewählten Begriffe "biegeweich" und "dünn" bedeuten hier, dass eine mechanische Steifigkeit bzw. Nachgiebigkeit quer zur Filterebene ohne technische Bedeutung ist, da die durch das Pulver aufgebrachten, quer zur Filterebene wirkenden Druckkräfte nicht durch den Filter, sondern durch den dahinter liegenden Stützkern aufgenommen und getragen werden. Des Weiteren ist nach der Erfindung innerhalb des Dosiermantels eine Montagehülse angeordnet, an deren der Dosierkammer zugewandtem Ende der Filter mittels einer Überwurfmutter befestigt ist. Die Befestigung der Baueinheit aus Filter und Stützkern mittels der Überwurfmutter ist leicht und kostengünstig zu realisieren, wobei eine exakte Volumeneinstellung erzielt ist. Bei Bedarf kann der Filter leicht ausgewechselt werden. Die Überwurfmutter kann insbesondere auf ihrer der Dosierkammer zugewandten Seite geometrisch beliebig ausgestaltet werden und damit an die Einsatzerfordernisse flexibel angepasst werden.

Durch die Abstützung des biegeweichen Filters mittels des Stützkerns ergibt sich eine verbesserte und über den gesamten Lebenszyklus zuverlässig vorhandene Dosiergenauigkeit, da der Filter nicht nachgeben kann und in Folge dessen das einmal eingestellte Dosiervolumen der Dosierkammer immer aufrecht erhalten bleibt. Die Abstützung erlaubt zudem die Verwendung von dünnen Oberflächenfiltern, die im Vergleich zu den Tiefenfiltern nach dem Stand der Technik deutlich kostengünstiger sind. Im Gegensatz zu den Tiefenfiltern können die Oberflächenfilter leicht gereinigt werden, da ein Zusetzen in der Tiefe des Filtermaterials kaum vorkommen kann. Sollte dies dennoch geschehen, kann der Oberflächenfilter als Verbrauchsmaterial leicht ausgetauscht werden. Die bisher erforderliche Überprüfung auf Funktionstüchtigkeit entfällt, da bei jedem Rüsten ein neuer Filter verwendet wird oder zumindest werden kann. Außerdem ist eine Anpassung eines vorhandenen Stechhebers an verschiedene Pulversorten leicht möglich. Durch die leichte Tauschbarkeit können je nach Produkt Filter unterschiedlicher Porengröße (z.B. 0,4 µm oder 1 µm) eingebaut werden.

Vorteilhaft ist der erfindungsgemäße Stechheber als Vakuumstechheber ausgeführt. Hierbei kann das zu dosierende Pulver ohne weiteres mit jedem geeigneten bzw. erforderlichen Unterdruck angesaugt und in der Dosierkammer gehalten werden, ohne dass die Gefahr einer Volumenveränderung durch die am Filter wirkenden Querkräfte besteht. Am Zielort kann das Pulver durch die Baueinheit aus Filter und Stützkern leicht ausgeblasen werden. Im Anschluss daran steht der Vakuumstechheber wieder mit dem exakt gleichen Dosiervolumen für den nächsten Dosierzyklus zur Verfügung.

In einer vorteilhaften Alternative kann der erfindungsgemäße Stechheber als Kompaktionsstechheber ausgeführt sein. Durch die Abstützung mittels des Stützkerns hält der Filter selbst den hohen Kompaktionsdrücken stand. Die Anwendung von Unter- bzw. Überdruck ist hier nicht erforderlich. Gleichwohl wird die Luftdurchlässigkeit der Baueinheit aus Filter und Stützkern dazu genutzt, die Dosierkammer beim Eintauchen des Stechhebers in das Pulverbett zu entlüften. Die zuvor in der Dosierkammer vorhandene Luftmenge kann leicht verdrängt werden, ohne dass sich ein störendes Luftpolster ausbilden kann, womit die Dosiergenauigkeit gesteigert ist.

In einer bevorzugten Ausführungsform ist innerhalb des Dosiermantels ein gegenüber dem Dosiermantel axial verschiebbarer Dosierstempel angeordnet, an dessen der Dosierkammer zugewandten Ende der Filter mittels einer Überwurfmutter befestigt ist. Über die axiale Verschiebbarkeit des Dosierstempels lässt sich das Volumen der Dosierkammer leicht einstellen. Alternativ oder zusätzlich kann der Dosierstempel beim Kompaktionsstechheber zum Auswerfen der dosierten Pulvermenge eingesetzt werden.

Es kann aber auch zweckmäßig sein, auf die axiale Verschiebbarkeit des Dosierstempels zu verzichten, wenn beispielsweise bei einem Vakuumstechheber die Ausstoßfunktion nicht benötigt wird und ein fest eingestelltes Dosiervolumen ausreicht. In diesem Falle ist innerhalb des Dosiermantels anstelle des Dosierstempels eine Montagehülse angeordnet, an deren der Dosierkammer zugewandten Ende der Filter mittels einer Überwurfmutter befestigt ist. Die weiteren Funktionen und Vorteile entsprechen denjenigen des vorstehend beschriebenen Dosierstempels.

In einer vorteilhaften Ausführungsform grenzt die Überwurfmutter flächenbündig an eine durch den Dosiermantel gebildete Umfangswand an und weist im Querschnitt betrachtet eine vom Filter bis zur Umfangswand reichende Schrägfläche auf. Bei einer bevorzugten Ausgestaltung als Rotationskörper ist diese Schrägfläche konisch. Hierdurch werden tote Winkel in der Dosierkammer vermieden, in denen Pulverreste hängen bleiben könnten. Die ausgestoßene Pulvermenge entspricht exakt dem durch die Geometrie der Dosierkammer vorgegebenen Dosiervolumen.

In einer bevorzugten Alternative grenzt die Überwurfmutter flächenbündig an eine durch den Dosiermantel gebildete Umfangswand an und weist eine ebene Stirnfläche auf, die in einer gemeinsamen Ebene mit dem Filter liegt. Hierbei wirkt sich die Überwurfmutter nicht störend auf die Kontur der Dosierkammer aus. Es entsteht eine geometrisch einfach gehaltene Dosierkammer mit exakt definiertem Volumen und geringer Gefahr, dass Pulverreste hängen bleiben.

Der Stützkern kann ein poröses Sinterbauteil oder dergleichen sein. Bevorzugt ist der Stützkern als massiver Körper mit darin ausgebildeten Luftkanälen ausgeführt. Die Luftkanäle erlauben ein gerichtetes und damit effektives Ausblasen des Pulvers aus der Dosierkammer. Insbesondere kann es zweckmäßig sein, dass zumindest ein Teil der Luftkanäle fächerförmig nach außen zur Umfangswand der Dosierkammer hin gerichtet ist. Beispielsweise in Verbindung mit der oben beschriebenen Schrägfläche der Überwurfmutter können auch die radial äußeren Bereiche der Dosierkammer zuverlässig und wirkungsvoll ausgeblasen werden.

Ausführungsbeispiele der Erfindung werden nachfolgend anhand der Zeichnung näher beschrieben. Es zeigen:

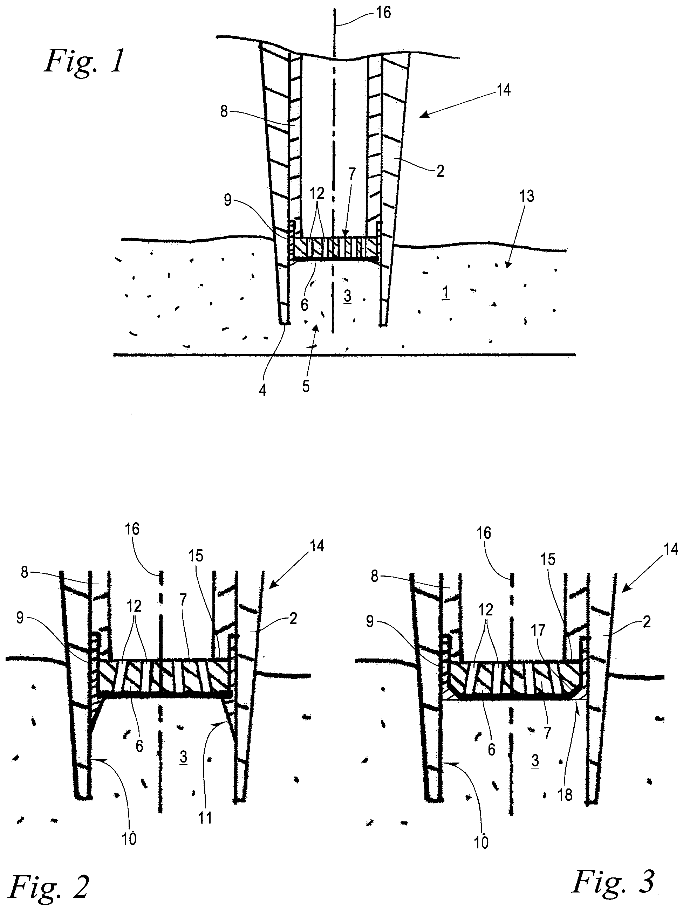

- Fig. 1: in einer schematischen Längsschnittdarstellung ein Ausführungsbeispiel eines erfindungsgemäßen Stechhebers mit einem äußeren Dosiermantel, der eine Dosierkammer in Umfangsrichtung umschließt, und mit einem dünnen Oberflächenfilter, der auf seiner der Dosierkammer abgewandten Rückseite mittels eines luftdurchlässigen und steifen Stützkerns abgestützt ist, wobei der Stützkern achsparallele Luftkanäle aufweist;
- Fig. 2: in einer vergrößerten Detailansicht eine Variante der Anordnung nach Fig. 1, bei der eine Überwurfmutter zur Befestigung der Rückhaltemembran und des Stützkerns mit einer verlängerten Schrägfläche ausgebildet ist, wobei ein Teil der im Stützkern ausgebildeten Luftkanäle fächerförmig nach außen zur Umfangswand der Dosierkammer hin gerichtet ist;
- Fig. 3: eine Variante der Anordnung nach Fig. 2, bei der der Stützkern mit einer Schrägfläche ausgebildet ist, und bei der die Überwurfmutter auf ihrer der Dosierkammer zugewandten Seite eine ebene Stirnfläche aufweist.

Fig. 1 zeigt in einer schematischen Längsschnittdarstellung ein erstes Ausführungsbeispiel eines erfindungsgemäßen Stechhebers 14. Der Stechheber 14 ist zum volumetrischen Dosieren von Pulver 1, insbesondere von pulvrigem Medikament in weiter unten näher beschriebener Weise vorgesehen und ausgestaltet. Der Stechheber 14 erstreckt sich entlang einer im Betrieb vertikal ausgerichteten Längsachse 16 und umfasst einen äußeren Dosiermantel 2, der eine Dosierkammer 3 bezogen auf die Längsachse 16 in Umfangsrichtung umschließt. Der Dosiermantel 2 weist an einem freien Ende 4 eine Öffnung 5 auf. In Achsrichtung der Öffnung 5 gegenüberliegend ist innerhalb des Dosiermantels 2 ein luftdurchlässiges Rückhalteelement in Form eines Filters 6 angeordnet. Damit ist die Dosierkammer 3 radial nach außen durch den starren Dosiermantel 2 sowie in Achsrichtung einerseits durch die Öffnung 5 und andererseits durch den Filter 6 begrenzt und bezüglich ihres Volumens exakt definiert.

Für den Dosiervorgang wird Pulver 1 in einem Pulverbett 13 bereitgehalten. Der Stechheber 14 wird mit seiner Öffnung 5 nach unten weisend in das Pulverbett 13 eingetaucht, wobei sich die Dosierkammer 3 durch die Öffnung 5 hindurch mit Pulver 1 befüllt. Anschließend wird der Stechheber 14 aus dem Pulverbett 13 vertikal nach oben herausgezogen, wobei eine in ihrem Volumen dem Volumen der Dosierkammer 3 entsprechende Pulvermenge in der Dosierkammer 3 verbleibt. In diesem Zustand wird der Stechheber 14 zum Zielort verfahren und die dosierte Pulvermenge aus der Dosierkammer beispielsweise in einen Zielbehälter überführt.

In der erfindungsgemäßen Ausgestaltung ist das Rückhaltelement als biegeweicher Filter 6 ausgeführt. Der Filter 6 kann ein nachgiebiger Tiefenfilter sein und ist im gezeigten bevorzugten Ausführungsbeispiel als dünner Oberflächenfilter ausgestaltet. Auf seiner der Dosierkammer 3 abgewandten Rück- bzw. Oberseite ist der Filter 6 mittels eines luftdurchlässigen, quer zur Ebene des Filters 6 steifen Stützkerns 7 abgestützt. Der Stützkern 7 kann beispielsweise aus einem porösen Sintermaterial bestehen. Im gezeigten bevorzugten Ausführungsbeispiel ist der Stützkern 7 als massiver Körper mit darin ausgebildeten Luftkanälen 12 ausgeführt. Die Luftkanäle 12 liegen hier parallel zur Längsachse 16 und stellen durch den Filter 6 hindurch eine druck- und strömungsübertragende Verbindung zwischen der Dosierkammer 3 und der gegenüberliegenden Rückseite des Stützkerns 7 her.

Innerhalb des Dosiermantels 2 ist eine Montagehülse angeordnet, an deren der Dosierkammer 3 zugewandten Ende der Filter 6 und auch der Stützkern 7 als unmittelbar übereinander liegender Stapel mittels einer Überwurfmutter 9 befestigt sind. Die Montagehülse kann in axial fester Position innerhalb des Dosiermantels 2 montiert sein, wodurch sich ein fest eingestelltes Volumen der Dosierkammer 3 ergibt. Dies kann beispielsweise bei einer Ausführung des Stechhebers 14 als Vakuumstechheber zweckmäßig sein. Hierbei wird mittels einer nicht dargestellten Unterdruckquelle innerhalb des Dosiermantels 2 bzw. innerhalb der Montagehülse ein Unterdruck aufgebaut, der das Pulver 1 durch den Stützkern 7 und den Filter 6 hindurch aus dem Pulverbett 13 in die Dosierkammer 3 ansaugt und dort festhält. Dabei wird das Pulver 1 vom Filter 6 zurückgehalten, kann also nicht durch den Filter 6 hindurchtreten. Nach dem Anheben der auf diese Weise dosierten Pulvermenge und nach dem Transport zum Zielort kann das Pulver 1 aus der Dosierkammer 3 in einen nicht dargestellten Zielbehälter ausgeblasen werden, indem anstelle des oben beschriebenen Unterdrucks ein Überdruck aufgebracht wird. Der Überdruck wirkt durch den Stützkern 7 und den Filter 6 hindurch auf das in der Dosierkammer 3 befindliche Pulver 1 und bläst dieses aus.

Bevorzugt ist die oben beschriebene Montagehülse gegenüber dem Dosiermantel 2 axial verschiebbar ausgeführt und wird dadurch zu einem Dosierstempel 8. In Verbindung mit dem genannten Vakuumstechheber kann durch eine geeignete Einstellung der Axialposition des Dosierstempels 8 relativ zum Dosiermantel 2 das gewünschte Volumen der Dosierkammer 3 eingestellt werden.

Alternativ zur genannten Ausführung als Vakuumstechheber kann der gezeigte Stechheber 14 auch als Kompaktionsstechheber ausgeführt sein und eingesetzt werden. In diesem Falle entfällt die Anwendung von Unter- und Überdruck. Der Kompaktionsstechheber wird in das Pulverbett 13 eingetaucht, wobei das Pulver durch die Öffnung 5 in die Dosierkammer 3 eintritt. Dabei wird das Pulver 1 kompaktiert und hält allein in Folge seiner Bindungskräfte in der Dosierkammer 3 fest. Die Funktion des Dosierstempels 8 zur Einstellung des Dosierkammervolumens bleibt erhalten. Bei ansonsten gleichen Merkmalen und Bezugszeichen kommt noch die Funktion hinzu, dass das Pulver 1 am Zielort durch eine Axialbewegung des Dosierstempels 8 aus der Dosierkammer 3 heraus in den nicht dargestellten Zielbehälter ausgestoßen wird. Diese Ausstoßfunktion kann auch beim Vakuumstechheber ergänzend oder alternativ zum Ausblasen eingesetzt werden.

Fig. 2 zeigt in einer vergrößerten Detailansicht eine erfindungsgemäße Variante des Stechhebers 14 nach Fig. 1, wobei hier der besseren Übersicht halber nur der Bereich der Dosierkammer 3 dargestellt ist. Ebenso wie beim Ausführungsbeispiel nach Fig. 1 weist der Dosierstempel 8 an seiner freien Stirnseite eine kreisringförmige Anlagefläche 15 und daran angrenzend ein Außengewinde auf. Die ringförmige Überwurfmutter 9 ist auf das Außengewinde des Dosierstempels 8 aufgeschraubt und verspannt dabei den Stapel aus Filter 6 und Stützkern 7 gegen die Anlagefläche 15 des Dosierstempels 8.

Umfangsseitig liegt die Überwurfmutter 9 spaltfrei und flächenbündig an einer durch den Dosiermantel 2 gebildeten Umfangswand 10 an. Im Querschnitt betrachtet weist die Überwurfmutter 9 auf ihrer der Dosierkammer 3 zugewandten Seite eine vom Filter 6 bis zur Umfangswand 10 reichende Schrägfläche 11 auf. Da der Stechheber 14 insgesamt bezogen auf seine Längsachse 16 als Rotationskörper ausgebildet ist, wird durch die Schrägfläche 11 ein vom Filter 6 zur Umfangswand 10 reichender, nach unten offener Konus gebildet.

Im Bereich der Dosierkammer 3, hier im Bereich der Schrägfläche 11 kann die Überwurfmutter nahezu frei und bedarfsgerecht ausgestaltet werden. Aus dem direkten Vergleich der Fig. 1 und 2 ergibt sich zum Beispiel, dass die Schrägfläche 11 in Fig. 1 nur sehr kurz und in Fig. 2 vergleichsweise sehr viel länger ausgestaltet ist. Der Öffnungswinkel der konischen Schrägfläche ist erheblich kleiner als 45° und insbesondere kleiner als 30°. Außerdem sind im Ausführungsbeispiel nach Fig. 2 abweichend von Fig. 1 zumindest ein Teil der Luftkanäle 12, hier alle Luftkanäle 12 nicht achsparallel angeordnet, sondern fächerförmig nach außen zur Umfangswand 10 der Dosierkammer 3 hin gerichtet. Die radial äußeren Luftkanäle 12 laufen damit zumindest näherungsweise parallel zur Schrägfläche 11 und erlauben damit ein gerichtetes Freiblasen derselben von Pulverrückständen.

Fig. 3 zeigt in einer vergrößerten Detaildarstellung analog zu Fig. 2 ein weiteres erfindungsgemäßes Ausführungsbeispiel. Hierbei weist die Überwurfmutter 9 keine der Dosierkammer 3 zugewandte Schrägfläche 11 (Fig. 2), sondern stattdessen eine ebene Stirnfläche 18 auf, die ebenso wie der Filter 6 senkrecht zur Längsachse 16 und außerdem in einer gemeinsamen Ebene mit dem Filter 6 liegt. Hierdurch wird eine zylindrische Dosierkammer 3 geschaffen. Um den Filter 6 auf dem Stützkern 7 und beides zusammen auf der Anlagefläche 15 des Dosierstempels 8 zu halten, ist am Stützkern 7 eine konisch umlaufende Schrägfläche 11 ausgebildet, gegen die eine korrespondierende Ausformung der Überwurfmutter 9 unter Zwischenlage des flexiblen Filters 6 drückt.

Sofern nicht abweichend beschrieben oder zeichnerisch dargestellt, stimmen die Ausführungsbeispiele nach den Fig. 1, 2 und 3 in den übrigen Merkmalen und Bezugszeichen überein.

## Patentansprüche

1. Stechheber (14) zum volumetrischen Dosieren von Pulver (1), insbesondere von pulvrigem Medikament, umfassend einen äußeren Dosiermantel (2), der eine Dosierkammer (3) in Umfangsrichtung umschließt, wobei der Dosiermantel (2) an einem freien Ende (4) des Stechhebers eine Öffnung (5) aufweist, wobei die Dosierkammer (3) auf ihrer der Öffnung (5) gegenüberliegenden Seite durch ein luftdurchlässiges Rückhalteelement begrenzt ist,
wobei das Rückhalteelement als biegeweicher Filter (6) ausgeführt ist, und wobei der Filter (6) auf seiner der Dosierkammer (3) abgewandten Rückseite mittels eines luftdurchlässigen, quer zur Ebene des Filters (6) steifen Stützkerns (7) abgestützt ist,
**dadurch gekennzeichnet, dass** innerhalb des Dosiermantels (2) eine Montagehülse angeordnet ist, an deren der Dosierkammer (3) zugewandtem Ende der Filter (6) mittels einer Überwurfmutter (9) befestigt ist.

2. Stechheber nach Anspruch 1,
**dadurch gekennzeichnet, dass** der Filter (6) ein Oberflächenfilter ist.

3. Stechheber nach Anspruch 1 oder 2,
**dadurch gekennzeichnet, dass** die Montagehülse als axial verschiebbarer Dosierstempel (8) ausgeführt ist.

4. Stechheber nach Anspruch 1,
**dadurch gekennzeichnet, dass** die Überwurfmutter (9) flächenbündig an eine durch den Dosiermantel (2) gebildete Umfangswand (10) angrenzt und im Querschnitt betrachtet eine vom Filter (6) bis zur Umfangswand (10) reichende Schrägfläche (11) aufweist.

5. Stechheber nach Anspruch 1,
**dadurch gekennzeichnet, dass** die Überwurfmutter (9) flächenbündig an eine durch den Dosiermantel (2) gebildete Umfangswand (10) angrenzt und eine ebene Stirnfläche (18) aufweist, die in einer gemeinsamen Ebene mit dem Filter (6) liegt.

6. Stechheber nach einem der Ansprüche 1 bis 5,
**dadurch gekennzeichnet, dass** der Stützkern (7) als massiver Körper mit darin ausgebildeten Luftkanälen (12) ausgeführt ist.

7. Stechheber nach Anspruch 6,
**dadurch gekennzeichnet, dass** zumindest ein Teil der Luftkanäle (12) fächerförmig nach außen zur Umfangswand (10) der Dosierkammer (3) hin gerichtet ist.

8. Stechheber nach einem der Ansprüche 1 bis 7,
**dadurch gekennzeichnet, dass** der Stechheber als Vakuumstechheber ausgeführt ist.

9. Stechheber nach einem der Ansprüche 1 bis 7,
**dadurch gekennzeichnet, dass** der Stechheber als Kompaktionsstechheber ausgeführt ist.

## Claims

1. Pipette (14) for the volumetric metering of powder (1), in particular powdered medication, comprising an outer metering shell (2) enclosing a metering chamber (3) in the circumferential direction, wherein the metering shell (2) has an opening (5) at a free end (4) of the pipette, wherein the metering chamber (3) is bounded by an air-permeable retaining element on the side opposite the opening (5),
wherein the retaining element is designed as a flexible filter (6) and wherein the filter (6) is supported on the rear side remote from the metering chamber (3) by means of an air-permeable supporting core (7), which is rigid transversely to the plane of the filter (6),
**characterised in that** an assembly sleeve, at the end of which facing the metering chamber (3) the filter (6) is secured by means of a union nut (9), is provided within the metering chamber (3).

2. Pipette according to claim 1,
**characterised in that** the filter (6) is a surface filter.

3. Pipette according to claim 1 or 2,
**characterised in that** the assembly sleeve is designed as an axially displaceable metering plunger (8).

4. Pipette according to claim 1,
**characterised in that** the union nut (9) adjoins a circumferential wall (10) formed by the metering shell (2) in a flush manner and, if viewed in crosssection, has a sloping surface (11) reaching from the filter (6) to the circumferential wall (10).

5. Pipette according to claim 1,
**characterised in that** the union nut (9) adjoins a circumferential wall (10) formed by the metering shell (2) in a flush manner and has a flat end face (18), which lies in a common plane with the filter (6).

6. Pipette according to any of claims 1 to 5,
**characterised in that** the supporting core (7) is designed as a solid body with air passages (12) formed therein.

7. Pipette according to claim 6,
**characterised in that** at least a part of the air passages (12) is oriented outwards in a fan shape towards the circumferential wall (10) of the metering chamber (3).

8. Pipette according to any of claims 1 to 7,
**characterised in that** the pipette is designed as a vacuum pipette.

9. Pipette according to any of claims 1 to 7,
**characterised in that** is designed as a compaction pipette.

## Revendications

1. Pipette (14) pour le dosage volumétrique de poudre (1), en particulier de médicament en poudre, comprenant une gaine de dosage extérieure (2) qui entoure une chambre de dosage (3) dans le sens circonférentiel, la gaine de dosage (2) présentant à une extrémité libre (4) de la pipette une ouverture (5), la chambre de dosage (3) étant limitée, sur son côté opposé à l'ouverture (5), par un élément de retenue perméable à l'air, l'élément de retenue étant conçu comme un filtre (6) souple en flexion, et le filtre (6) étant en appui, sur sa face arrière opposée à la chambre de dosage (3), à l'aide d'un noyau d'appui (7) perméable à l'air et rigide transversalement au plan du filtre (6),
**caractérisée en ce qu'**il est prévu, à l'intérieur de la gaine de dosage (2), une douille de montage avec, fixé à son extrémité tournée vers la chambre de dosage (3) à l'aide d'un écrou-raccord (9), le filtre (6).

2. Pipette selon la revendication 1,
**caractérisée en ce que** le filtre (6) est un filtre de surface.

3. Pipette selon la revendication 1 ou 2,
**caractérisée en ce que** la douille de montage est conçue comme un piston de dosage (8) mobile axialement.

4. Pipette selon la revendication 1,
**caractérisée en ce que** l'écrou-raccord (9) est voisin, dans le même plan, d'une paroi circonférentielle (10) formée par la gaine de dosage (2) et présente, vu en coupe transversale, une surface inclinée (11) qui va du filtre (6) jusqu'à la paroi circonférentielle (10).

5. Pipette selon la revendication 1,
**caractérisée en ce que** l'écrou-raccord (9) est voisin, dans le même plan, d'une paroi circonférentielle (10) formée par la gaine de dosage (2) et présente une surface frontale plane (18) qui est située dans un plan commun avec le filtre (6).

6. Pipette selon l'une des revendications 1 à 5,
**caractérisée en ce que** le noyau d'appui (7) est conçu comme un corps massif dans lequel sont formés des passages d'air (12).

7. Pipette selon la revendication 6,
**caractérisée en ce qu'**une partie au moins des passages d'air (12) sont dirigés en éventail vers l'extérieur, vers la paroi circonférentielle (10) de la chambre de dosage (3).

8. Pipette selon l'une des revendications 1 à 7,
**caractérisée en ce qu'**elle est conçue comme une pipette à vide.

9. Pipette selon l'une des revendications 1 à 7,
**caractérisée en ce qu'**elle est conçue comme une pipette à compaction.
